# EUROPÄISCHE PATENTSCHRIFT

(11) **EP 3 224 077 B1**
(45) Veröffentlichungstag und Bekanntmachung des Hinweises auf die Patenterteilung: **17.10.2018**
(21) Anmeldenummer: 15790461.6
(22) Anmeldetag: 29.10.2015
(51) Int. Cl.: B60K 37/06, G06F 3/0354

(54) **VERFAHREN ZUM BETREIBEN EINER BEDIENVORRICHTUNG EINES KRAFTFAHRZEUGS**
METHOD FOR OPERATING AN OPERATOR CONTROL DEVICE OF A MOTOR VEHICLE
PROCÉDÉ DE FONCTIONNEMENT D'UN DISPOSITIF DE COMMANDE D'UN VEHICULE AUTOMOBILE

(30) Priorität: 24.11.2014 DE 102014017377
(43) Veröffentlichungstag der Anmeldung: 04.10.2017
(73) Patentinhaber: Audi AG, 85045 Ingolstadt (DE)
(72) Erfinder: MÜLLER, Ulrich, 85055 Ingolstadt (DE); WACHINGER, Michael, 86571 Winkelhausen (DE); KRAMER, Tim, 85117 Eitensheim (DE)
(74) Vertreter: Brandt, Kai
(86) Internationale Anmeldenummer: PCT/EP2015/002158
(87) Internationale Veröffentlichungsnummer: WO 2016/082908

(56) Entgegenhaltungen:
- EP-A1- 2 793 111

## Beschreibung

Die Erfindung betrifft ein Verfahren zum Betreiben einer Bedienvorrichtung eines Kraftfahrzeugs. Das Verfahren umfasst das Erfassen einer Position, an welcher eine berührungssensitive Bedieneinheit mit einem Objekt berührt wird, und das Erfassen eines Druckes mittels eines Drucksensors, mit welchem die berührungssensitive Bedieneinheit an der Position mit dem Objekt beaufschlagt wird. Die Erfindung betrifft außerdem eine Bedienvorrichtung.

Berührungssensitive Bedieneinheiten bzw. Touchpads sind bereits aus dem Stand der Technik bekannt und werden beispielsweise in Laptops verwendet, um Funktionen des Laptops zu steuern oder auszuwählen. Die Touchpads können üblicherweise eine Position eines Fingers ermitteln, mit welchem ein Nutzer das Touchpad berührt, und damit eine Interaktion mit einem Bildschirminhalt des Laptops ermöglichen. Dazu kann beispielsweise ein Mauszeiger auf dem Bildschirm gesteuert werden, indem der Nutzer mit seinem Finger das Touchpad berührt.

Zunehmend werden solche Touchpads auch in Kraftfahrzeugen eingesetzt, um Funktionen des Kraftfahrzeugs, beispielsweise Infotainmentkomponenten, ein Navigationssystem oder ein Telefon, steuern zu können. Während der Fahrt des Kraftfahrzeugs können durch das Fahrverhalten und andere Einflüsse Beschleunigungskräfte entstehen, die auch auf den Fahrer einwirken. Diese Beschleunigungskräfte können eine Bedienung der Touchpads, beispielsweise eine Eingabe mit dem Finger auf der berührungssensitiven Bedieneinheit, beeinflussen. Daraus können Abweichungen zwischen gewollter Eingabe und getätigter Eingabe auf dem Touchpad entstehen. Dazu schlägt die DE 10 2001 089 894 A1 ein Verfahren vor, durch das trotz einer von der beabsichtigten Eingabe abweichenden Eingabe die der beabsichtigten Eingabe entsprechende Funktionen des Kraftfahrzeugs ausgeführt oder aufgerufen werden.

Auch ist aus dem Stand der Technik bekannt, Touchpads mit einer Kraftsensorik zu kombinieren, welche eine Fingerkraft des Nutzers, also einen Druck, den der Nutzer mit seinem Finger auf das Touchpad ausübt, ermittelt. Damit ist eine Funktionsauslösung über eine Betätigungskraft bzw. einen Betätigungsdruck möglich. Dies bedeutet, dass der Nutzer eine Funktion beispielsweise durch Gleiten über das Touchpad anwählen und durch Drücken die Funktion auswählen kann. Damit kann das Verhalten einer herkömmlichen mechanischen Taste simuliert werden. Erst beim Druck auf das Touchpad wird die jeweilige Funktion ausgelöst. Um den subjektiven Qualitätseindruck beim Betätigen weiterhin zu verbessern, kann ein mechanischer haptischer Impuls, beispielsweise eine Vibration, durch einen Aktuator erzeugt werden. Dies ist beispielsweise auch aus der FR 2 961 610 A1 bekannt. Zusätzlich kann auch ein akustischer Ton, beispielsweise ein Klick-Geräusch, über einen Lautsprecher bei einer Betätigung erzeugt werden. Das Touchpad fühlt sich beim Betätigen nahezu wie eine mechanische Taste an.
Die DE 10 2008 051 051 A1 zeigt ein Verfahren zum Anzeigen von Informationen in einem Fahrzeug, bei dem auf einer Anzeigefläche eine Teilmenge angezeigt wird, wobei eine Größe der angezeigten Teilmenge von einem Vergrößerungsfaktor abhängt.

Das Dokument EP 2 793 111 A1 offenbart den Oberbegriff des Anspruchs 1.

Es ist Aufgabe der vorliegenden Erfindung, eine Lösung bereitzustellen, mittels welcher eine angenehmere und zuverlässigere Bedienung einer Bedienvorrichtung ermöglicht werden kann und mittels welcher Fehlbedienungen vermieden werden können.
Diese Aufgabe wird erfindungsgemäß durch ein Verfahren sowie durch eine Bedienvorrichtung mit den Merkmalen gemäß der unabhängigen Patentansprüche gelöst. Vorteilhafte Ausführungen der Erfindung sind Gegenstand der abhängigen Patentansprüche, der Beschreibung und der Figuren.
Ein erfindungsgemäßes Verfahren dient zum Betreiben einer Bedienvorrichtung eines Kraftfahrzeugs. Das Verfahren umfasst das Erfassen einer Position, an welcher eine berührungssensitive Bedieneinheit mit einem Objekt berührt wird, und das Erfassen eines Druckes mittels einer Erfassungseinrichtung, mit welchem die berührungssensitive Bedieneinheit an der Position mit dem Objekt beaufschlagt wird. Darüber hinaus umfasst das Verfahren das Erfassen einer Geschwindigkeit und/oder einer Beschleunigung des Kraftfahrzeugs, das Vorgeben eines Druckschwellwerts in Abhängigkeit von der erfassten Geschwindigkeit und/oder der erfassten Beschleunigung des Kraftfahrzeugs, das Ermitteln, ob der erfasste Druck größer als der vorgegebene Druckschwellwert ist, und das Auslösen einer der erfassten Position zugeordneten Funktion des Kraftfahrzeugs ausschließlich, falls der erfasste Druck größer als der vorgegebene Druckschwellwert ist.

Mittels der Bedienvorrichtung können Funktionen des Kraftfahrzeugs, beispielsweise Infotainmentfunktionen des Kraftfahrzeugs, ausgewählt und/oder ausgelöst und/oder gesteuert werden. Die Bedienvorrichtung weist eine berührungssensitive Bedieneinheit auf, welche beispielsweise als eine berührungssensitive Fläche bzw. als ein Touchpad ausgestaltet sein kann und welche mittels an sich bekannter Funktionsprinzipien eine Berührungsempfindlichkeit umsetzen kann. Die berührungssensitive Bedieneinheit kann eine Position eines Objektes, beispielsweise eines Fingers eines Nutzers, auf der berührungssensitiven Bedieneinheit erkennen. Außerdem weist die Bedienvorrichtung eine Erfassungseinrichtung, beispielsweise einen Drucksensor, auf, mittels welcher ein Druck bzw. eine Kraft erfasst wird, den bzw. die das Objekt beim Berühren der Position auf die berührungssensitive Fläche ausübt.

Erfindungsgemäß ist es nun vorgesehen, dass die der Position zugeordnete Funktion nur dann ausgelöst wird, wenn der an der zugeordneten Position beaufschlagte Druck, welcher durch das Objekt bzw. den Finger auf die berührungssensitive Bedieneinheit ausgeübt und von der Erfassungseinrichtung erfasst wird, einen vorgegebenen Druckschwellwert überschreitet, also wenn der beaufschlagte Druck größer als der vorgegebene Druckschwellwert ist. Der vorgegebene Druckschwellwert kann auch als Auslöseschwelle bezeichnet werden. Um die Funktion auszulösen, ist es also vorgesehen, dass der Nutzer einen Druck bzw. einen Auslösedruck auf die berührungssensitive Bedieneinheit aufbringt, welcher die Auslöseschwelle überschreitet.

Darüber hinaus wird der vorgegebene Druckschwellwert in Abhängigkeit einer Geschwindigkeit und/oder einer Beschleunigung des Kraftfahrzeugs verändert bzw. variiert. Als die Geschwindigkeit wird dabei insbesondere eine Geschwindigkeit in Fahrtrichtung des Kraftfahrzeugs erfasst. Als die Beschleunigung wird insbesondere ein Beschleunigungsvektor erfasst, welcher eine Komponente in Fahrzeuglängsrichtung und/oder eine Komponente in Fahrzeugquerrichtung und/oder eine Komponente in Fahrzeughochrichtung aufweisen kann. Die Geschwindigkeit und/oder die Beschleunigung können dabei kontinuierlich oder zu vorgegebenen Zeitpunkten erfasst werden. In Abhängigkeit der erfassten Geschwindigkeit und/oder der erfassten Beschleunigung wird der Druckschwellwert vorgegeben. Wenn sich beispielsweise die Geschwindigkeit zwischen zwei Erfassungszeitpunkten ändert, kann der Druckschwellwert dynamisch an diese Veränderung angepasst werden. Um also die Funktion auswählen und/oder auslösen und/oder steuern zu können, ist es vorgesehen, dass der Nutzer mit dem Objekt einen Druck auf die der Funktion zugeordnete Position auf der berührungssensitiven Bedieneinheit aufbringt, welcher den aktuell vorliegenden vorgegebenen Druckschwellwert überschreitet.

Dabei können die Funktionen definierten Positionen auf der berührungssensitiven Bedieneinheit zugeordnet sein. Dazu können auf der berührungssensitiven Bedieneinheit beispielsweise Kennzeichnungen oder Symbole dargestellt sein, welche die der jeweiligen definierten Position zugeordnete Funktion beschreiben. Um beispielsweise eine Funktion auszulösen, übt der Nutzer also auf berührungssensitive Bedieneinheit an der mit der Kennzeichnung versehenen zugeordneten Position den Auslösedruck aus. Für den Nutzer ergibt sich also der Eindruck, als würde er einen mechanischen Taster bedienen.

Es kann aber auch vorgesehen sein, dass sich die den Funktionen zugeordneten Positionen auf der berührungssensitiven Bedieneinheit aus einer Interaktion der berührungssensitiven Bedieneinheit mit einer Anzeigeeinheit des Kraftfahrzeugs ergeben. Beispielsweise kann ein Zeigeelement, beispielsweise ein Mauszeiger, durch Berühren der berührungssensitive Bedieneinheit auf der Anzeigeeinheit gesteuert werden und die berührungssensitive Bedieneinheit mit dem Auslösedruck gedrückt werden, sobald sich das Zeigeelement an der gewünschten Position auf dem Anzeigeelement befindet. So kann eine auf der Anzeigeeinheit dargestellte Funktion mittels des Zeigeelements angewählt und durch Drücken der berührungssensitiven Bedieneinheit ausgewählt und/oder ausgelöst werden. In diesem Fall wird die berührungssensitive Bedieneinheit also wie ein an sich bekanntes Touchpad bedient.

Es ist aber auch möglich, die berührungssensitive Bedieneinheit in Bereiche zu unterteilen, wobei die berührungssensitive Bedieneinheit beispielsweise in einem ersten Bereich wie ein an sich bekanntes Touchpad bedient wird, indem die berührungssensitive Bedieneinheit mit einer Anzeigeeinheit interagiert. Auf einem zweiten Bereich der berührungssensitiven Bedieneinheit können beispielsweise Kennzeichnungen auf absoluten Positionen vorgesehen sein, wobei durch Drücken der Bedieneinheit an einer der absoluten Positionen die zugeordnete definierte Funktion auslösbar ist. Diese den vorgegebenen bzw. definierten Funktionen zugeordnete Positionen in dem zweiten Bereich werden auch also sogenannte Preset-Tasten bezeichnet. Eine solche Preset-Taste kann beispielsweise ein Menü-Taste sein, mittels welcher eine Menüsituation auf der Anzeigeeinheit aufgerufen werden kann, oder eine Navigationstaste, mit welcher beispielsweise eine auf der Anzeigeeinheit dargestellte Menüsituation verlassen werden kann.

Mittels des erfindungsgemäßen Verfahrens kann also ein Druckschwellwert an eine Fahrsituation, welche durch eine Geschwindigkeit und/oder eine Beschleunigung charakterisiert wird, angepasst werden, da die Aufmerksamkeit, welche ein Fahrer des Kraftfahrzeugs der Bedienvorrichtung zuwenden kann, in der Regel von der Fahrsituation abhängt. Somit kann einem Fahrer in jeder Fahrsituation eine einfache Bedienung der Bedienvorrichtung ohne Fehlbedienungen ermöglicht werden.

Gemäß einer vorteilhaften Ausführungsform wird eine Kennlinie vorgegeben, anhand welcher jedem Geschwindigkeitswert und/oder jedem Beschleunigungswert ein Druckwert zuordnet ist, wobei einer der Druckwerte in Abhängigkeit von der erfassten Geschwindigkeit und/oder der erfassten Beschleunigung des Kraftfahrzeugs als der Druckschwellwert vorgeben wird. Die Druckwerte können auch in einer Wertetabelle, beispielsweise einem Lookup-Table (LUT) vorgegeben werden. Dabei können die Druckwerte und die Geschwindigkeitswerte und/oder die Druckwerte und die Beschleunigungswerte beispielsweise proportional zueinander sein. Die Kennlinie kann also beispielsweise eine lineare Funktion darstellen. Somit wird auch der Druckschwellwert proportional zur erfassten Geschwindigkeit und/oder erfassten Beschleunigung verändert.

Alternativ können die Geschwindigkeitswerte und/oder die Beschleunigungswerte in Intervalle eingeteilt werden, wobei jedem der Intervalle ein konstanter Druckwert zugeordnet wird. Die Kennlinie kann also in diesem Fall eine Treppenfunktion darstellen. Somit wird auch der Druckschwellwert schrittweise verändert. Es kann aber auch vorgesehen sein, dass die Kennlinie in Bereiche unterteilt wird, wobei sich in einem Teilbereich ein Druckwert proportional zu einer Geschwindigkeit und/oder einer Beschleunigung verhält und in einem anderen Teilbereich konstante Druckwerte für ein vorbestimmtes Geschwindigkeitsintervall und/oder Beschleunigungsintervall bereitgestellt werden.

Mittels der Kennlinie bzw. der Wertetabelle kann auf besonders einfache Weise eine Zuordnung zwischen Geschwindigkeit und Druck und/oder zwischen Beschleunigung und Druck ermöglich werden, indem der zu der erfassten Geschwindigkeit und/oder zu der erfassten Beschleunigung korrespondierende Druckwert aus der Kennlinie ausgewählt wird und als der Druckschwellwert vorgegeben wird. Der Druckschwellwert kann somit auf besonders einfache Weise und ohne aufwändige Berechnungen dynamisch an die aktuell gemessene Geschwindigkeit und/oder die aktuell gemessene Beschleunigung angepasst werden.

Vorzugsweise wird der Druckwert mit steigender Geschwindigkeit und/oder steigender Beschleunigung erhöht. Der Erfindung liegt dabei die Erkenntnis zu Grunde, dass ein Fahrer sich üblicherweise umso mehr auf die Verkehrssituation konzentrieren muss, je schneller er fährt und/oder je stärker er beschleunigt. Daher kann der Fahrer bei steigender Geschwindigkeit und/oder steigender Beschleunigung seine Aufmerksamkeit schwerer auf die Bedienung der Bedienvorrichtung lenken. Um zu verhindern, dass bei steigender Geschwindigkeit und/oder steigender Beschleunigung Fehlbedienungen durch den Fahrer vorgenommen werden, wird der Druckschwellwert angehoben. Bei einem höheren Druckschwellwert muss der Nutzer also einen größeren Druck auf die berührungssensitive Bedieneinheit aufbringen - also stärker auf die berührungssensitive Bedieneinheit drücken - als bei einem niedrigeren Druckschwellwert. Somit können in vorteilhafter Weise Fehlbedienungen der Bedienvorrichtung verhindert werden.

Besonders bevorzugt wird ein erster Druckwert als der Druckschwellwert vorgegeben, wenn das Kraftfahrzeug steht, und ein zweiter Druckwert als der Druckschwellwert vorgegeben wird, wenn das Kraftfahrzeug fährt. Ein Nutzer, insbesondere der Fahrer des Kraftfahrzeugs, wendet im Stand des Kraftfahrzeugs in der Regel seine Aufmerksamkeit der Bedienung der Bedienvorrichtung zu. Dabei wird seitens des Nutzers üblicherweise ein geringerer Auslösedruck bzw. eine geringere Auslösekraft als angenehm empfunden, sodass das Auslösen der Funktion schnell und "leicht" erfolgen kann. Daher kann als der Druckschwellwert im Stand des Kraftfahrzeugs beispielsweise ein erster Druckwert vorgegeben werden, welcher ein einfaches und schnelles Auslösen der Funktion ermöglicht. Dieser Druckwert kann beispielsweise etwa 3 N betragen.

Während der Fahrt ist jedoch die primäre Aufgabe des Fahrers das Führen des Kraftfahrzeugs. Der Fahrer bedient die Bedienvorrichtung bzw. das Touchpad dabei in der Regel "blind", also ohne seinen Blick auf das Touchpad zu wenden. Dabei kann es leicht zu einer versehentlichen Auslösung der Funktion kommen, da beim Annähern bzw. beim Berühren der berührungssensitiven Bedieneinheit leicht und unbeabsichtigt eine zu niedrig gewählte Auslöseschwelle überschritten werden kann. Daher erweist es sich als vorteilhaft, wenn während der Fahrt des Kraftfahrzeugs, also während der Fahrer das Kraftfahrzeug führt, die Auslöseschwelle angehoben wird. Mit anderen Worten bedeutet dies, dass ein im Vergleich zum ersten Druckwert größerer zweiter Druckwert als der Druckschwellwert vorgegeben wird. Der zweite Druckwert kann dabei beispielsweise etwa 5 N betragen. Mittels des erfindungsgemäßen Verfahrens kann also eine benutzerfreundliche und einfache Bedienung der Bedienvorrichtung bereitgestellt werden.

Es kann vorgesehen sein, dass zumindest ein dritter Druckwert als der Druckschwellwert vorgegeben wird, wenn das Kraftfahrzeug fährt und die erfasste Geschwindigkeit und/oder die erfasste Beschleunigung einen vorgegebenen Geschwindigkeitswert und/oder einen vorgegebenen Beschleunigungswert überschreitet. So können auch während der Fahrt unterschiedliche Auslöseschwellen bereitgestellt werden. Dabei kann beispielsweise während der Fahrt der zweite Druckwert als der Druckschwellwert vorgegeben werden, wenn die erfasste Geschwindigkeit und/oder die erfasste Beschleunigung den vorgegebenen Geschwindigkeitswert und/oder den vorgegebenen Beschleunigungswert unterschreitet oder dem vorgegebenen Geschwindigkeitswert und/oder dem vorgegebenen Beschleunigungswert entspricht. Der dritte Druckwert als der Druckschwellwert kann bereitgestellt werden, sobald die erfasste Geschwindigkeit und/oder die erfasste Beschleunigung den vorgegebenen Geschwindigkeitswert und/oder den vorgegebenen Beschleunigungswert überschreitet. Durch das Vorgeben von lediglich drei Druckschwellwerten kann sich ein Nutzer, insbesondere der Fahrer, besonders gut an eine Bedienung der Bedienvorrichtung gewöhnen.

Eine bevorzugte Ausgestaltung der Erfindung sieht vor, dass beim Erfassen eines Bodenwellen aufweisenden Untergrunds, auf welchem sich das Kraftfahrzeug bewegt, der Druckschwellwert im Vergleich zu einem Druckschwellwert, welcher bei einem keine Bodenwellen aufweisenden Untergrund vorgegeben ist, erhöht wird, wobei anhand der erfassten Geschwindigkeit und/oder der erfassten Beschleunigung ermittelt wird, ob sich das Kraftfahrzeug auf dem Bodenwellen aufweisenden Untergrund bewegt. Mit anderen Worten bedeutet dies, dass der Druckschwellwert erhöht wird, wenn anhand der erfassten Geschwindigkeit und/oder der erfassten Beschleunigung ermittelt wird, dass sich das Kraftfahrzeug auf einem Bodenwellen aufweisenden Untergrund bewegt. Wenn sich das Kraftfahrzeug auf einem Untergrund mit Bodenwellen, beispielsweise auf einer unebenen oder holprigen Fahrbahn, bewegt, so können die daraus resultierenden Vibrationen des Kraftfahrzeugs auch den Nutzer, insbesondere den Fahrer des Kraftfahrzeugs, sowie dessen Bedieneingaben beeinflussen. Möchte der Nutzer beispielsweise eine bestimmte Funktion des Kraftfahrzeugs auslösen bzw. auswählen, so können sich für den Nutzer durch die Vibrationen Schwierigkeiten ergeben, die der Funktion zugeordnete Position auf der berührungssensitiven Bedieneinheit mit dem Objekt bzw. mit dem Finger zu berühren und/oder zu drücken. Somit können diese Vibrationen eine Fehlbedienung seitens des Nutzers zur Folge haben, falls die Auslöseschwelle bzw. der Druckschwellwert zu gering gewählt wird. Aus diesem Grund wird die Auslöseschwelle bzw. der Druckschwellwert erhöht, um in vorteilhafter Weise auch auf unebener Fahrbahn eine korrekte und angenehme Bedienung der Bedienvorrichtung zu ermöglichen.

Es erweist sich als vorteilhaft, wenn zur Ermittelung des Bodenwellen aufweisenden Untergrunds eine Vertikalbeschleunigung des Kraftfahrzeugs über ein vorgegebenes Zeitintervall erfasst und überprüft wird, ob die Vertikalbeschleunigung innerhalb des Zeitintervalls einen durch die Bodenwellen verursachten, im Wesentlichen periodischen Verlauf aufweist. Mit anderen Worten bedeutet dies, dass über einen vorgegebenen Zeitraum bzw. ein vorgegebenes Zeitintervall beobachtet wird, ob ein Verlauf der Vertikalbeschleunigung eine Periodizität aufweist. Fährt das Kraftfahrzeug nämlich auf einem mit Bodenwellen versehenen Untergrund, so werden die Fahrunebenheiten auf das Kraftfahrzeug, insbesondere eine Karosserie des Kraftfahrzeugs, übertragen, was beispielsweise eine Auf-und-ab-Bewegung bzw. ein Rütteln des Kraftfahrzeugs in vertikaler Richtung, also in Fahrzeughochrichtung, zur Folge haben kann. Diese Auf-und-ab-Bewegung bzw. dieses Rütteln in vertikaler Richtung kann über die Vertikalbeschleunigung erfasst werden und zeigt einen im Wesentlichen periodischen Verlauf. Ein im wesentlichen periodischer Verlauf, welcher insbesondere eine vorbestimmte Frequenz überschreitet, deutet also darauf hin, dass sich das Kraftfahrzeug auf einer unebenen Fahrbahn fortbewegt. Durch Analysieren der Vertikalbeschleunigung kann somit auf einfache Weise herausgefunden werden, ob ein mit Bodenwellen versehener Untergrund vorliegt und ob eine Erhöhung der Auslöseschwelle notwendig ist.

Bevorzugt wird eine Beschleunigung des Kraftfahrzeugs derart gemessen, dass mittels der Erfassungseinrichtung ein Druck erfasst wird, welcher durch ein Eigengewicht der berührungssensitiven Bedieneinheit bei der Beschleunigung des Kraftfahrtzeugs auf die Erfassungseinrichtung ausgeübt wird. Bei einer Beschleunigung des Kraftfahrzeugs wird die berührungssensitive Bedieneinheit, welche eine Masse bzw. ein Eigengewicht aufweist, beschleunigt. Durch die Beschleunigung beaufschlagt die berührungssensitive Bedieneinheit die Erfassungseinrichtung, beispielsweise den Drucksensor, mit einem Druck bzw. einer Kraft, welche durch die Erfassungseinrichtung gemessen wird. Durch eine Erfassung der Beschleunigung über die Erfassungseinrichtung der-Bedienvorrichtung ist die Bedienvorrichtung besonders autark gestaltet, da in vorteilhafter Weise auf eine Kommunikation mit anderen Sensoreinrichtungen des Kraftfahrzeugs, welche eine Beschleunigung erfassen können, verzichtet werden kann.

Es kann vorgesehen sein, dass eine Beschleunigung und/oder eine Geschwindigkeit von zumindest einer Sensoreinrichtung des Kraftfahrzeugs gemessen und zum Vorgegeben des zumindest einen Druckschwellwertes bereitgestellt werden. Dazu kann die von der zumindest einen Sensoreinrichtung als Sensorsignal erfasste Geschwindigkeit und/oder erfasste Beschleunigung einer der Bedienvorrichtung zugeordneten Steuereinrichtung bereitgestellt werden, welche den Druckschwellwert in Abhängigkeit des Sensorsignals vorgeben kann. Solche Sensoreinrichtung können beispielsweise als Geschwindigkeitssensoren und/oder Beschleunigungssensoren ausgestaltet sein und sind in der Regel bereits in Kraftfahrzeugen vorhanden. Somit kann eine gemessene Geschwindigkeit und/oder eine gemessene Beschleunigung besonders aufwandsarm bereitgestellt werden.

Zur Erfindung gehört außerdem eine Bedienvorrichtung für ein Kraftfahrzeug, mit einer berührungssensitiven Bedieneinheit, welche dazu ausgebildet ist, eine Position, an welcher die berührungssensitive Bedieneinheit mit einem Objekt berührt wird, zu erfassen, und einer Erfassungseinrichtung, welche dazu ausgebildet ist, einen Druck zu erfassen, mit welchem die Bedieneinheit an der Position mit dem Objekt beaufschlagt wird. Darüber hinaus weist die Bedienvorrichtung eine Steuereinrichtung auf, welche dazu ausgebildet ist, zumindest einen Druckschwellwert in Abhängigkeit von einer erfassten Geschwindigkeit und/oder einer erfassten Beschleunigung des Kraftfahrzeugs vorzugeben, zu ermitteln, ob der erfasste Druck größer als der vorgegebene Druckschwellwert ist, und ein Auslösen der erfassten Position zugeordneten Funktion des Kraftfahrzeugs zu bewirken, falls der erfasste Druck größer als der vorgegebene Druckschwellwert ist. Die Bedienvorrichtung kann beispielsweise in einer Mittelkonsole des Kraftfahrzeugs angeordnet sein.

Die mit Bezug auf das erfindungsgemäße Verfahren vorgestellten bevorzugten Ausführungsformen und deren Vorteile gelten entsprechend für die erfindungsgemäße Bedienvorrichtung.

Im Folgenden wird die Erfindung nun anhand eines bevorzugten Ausführungsbeispiels, wie auch unter Bezugnahme auf die beigefügte Zeichnung näher erläutert.

Es zeigen:
- Fig.1: eine schematische Darstellung einer Ausführungsform einer erfindungsgemäßen Bedienvorrichtung;
- Fig. 2: eine schematische Darstellung von Kennlinien; und
- Fig. 3: eine schematische Darstellung einer gemessenen Vertikalbeschleunigung des Kraftfahrzeug.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

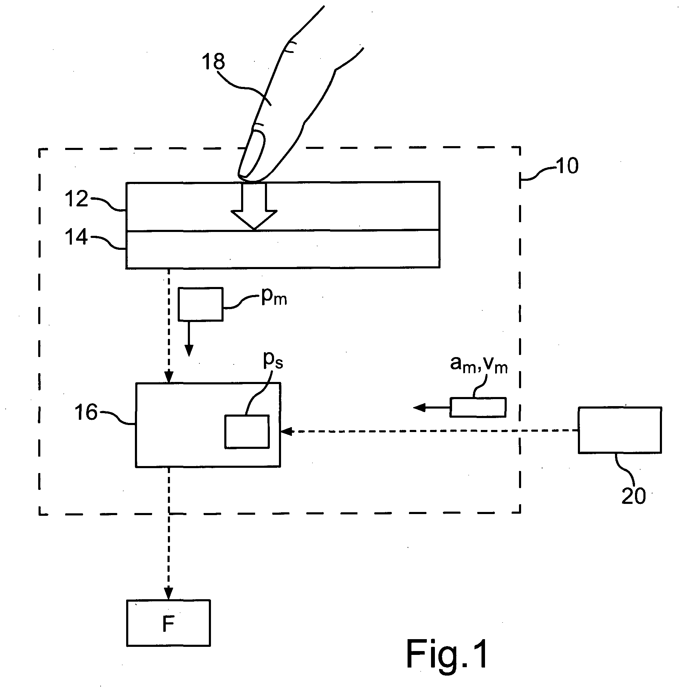

Fig. 1 zeigt eine Bedienvorrichtung 10 zum Auswählen und/oder Auslösen und/oder Steuern von Funktionen F eines hier nicht dargestellten Kraftfahrzeugs. Solche Funktionen F können beispielsweise ein Navigationssystem des Kraftfahrzeugs, eine Multimediaeinrichtung, ein Infotainmentsystem, ein sogenanntes Car-Menü, welches auf einer hier nicht gezeigten Anzeigeeinheit des Kraftfahrzeugs darstellbar ist, oder eine Freisprecheinrichtung des Kraftfahrzeugs betreffen.

Die Bedienvorrichtung 10 kann beispielsweise in einer Mittelkonsole vorgesehen sein, sodass sie insbesondere für einen Fahrer des Kraftfahrzeugs auf einfache Weise bedienbar ist. Die Bedienvorrichtung 10 weist hier eine berührungssensitive Bedieneinheit 12, eine Erfassungseinrichtung 14 und eine Steuereinrichtung 16 auf. Die Erfassungseinrichtung 14 kann beispielsweise als ein an sich bekannter Drucksensor ausgestaltet sein. Die Steuereinrichtung 16 kann auch ein Steuergerät des Kraftfahrzeugs sein, welches dazu ausgelegt ist, mit der Bedienvorrichtung 10, insbesondere mit der Erfassungseinrichtung 14 der Bedienvorrichtung 10, zu kommunizieren.

Die berührungssensitive Bedieneinheit 12 ist dazu ausgelegt, eine Position zu erfassen, an welcher die berührungssensitive Bedieneinheit 12 mit einem Objekt 18, beispielsweise einem Finger, berührt wird. Die Erfassungseinrichtung 14 ist dazu ausgelegt, einen Druck pₘ zu erfassen, welchen das Objekt 18 an der Position auf die berührungssensitive Bedieneinheit 12 aufbringt. Dieser von der Erfassungseinrichtung 14 erfasste Druck pₘ kann der Steuereinrichtung 16 bereitgestellt werden.

Die Steuereinrichtung 16 ist dazu ausgelegt, einen Druckschwellwert pₛ in Abhängigkeit einer Geschwindigkeit vₘ und/oder einer Beschleunigung aₘ des Kraftfahrzeugs zu bestimmen. Die Geschwindigkeit vₘ und/oder die Beschleunigung aₘ können beispielsweise von einer Sensoreinrichtung 20 des Kraftfahrzeugs bereitgestellt werden. Die Steuereinrichtung 16 vergleicht den von der Erfassungseinrichtung 14 erfassten Druck pₘ mit dem aktuell vorgegebenen Druckschwellwert pₛ. Falls der erfasste Druck pₘ den Druckschwellwert pₛ überschreitet, ist die Steuereinrichtung 16 dazu ausgelegt, die Funktion F auszuwählen und/oder auszulösen und/oder zu steuern. Die Funktion F wird also nur ausgewählt und/oder ausgelöst und/oder gesteuert, falls das Objekt 18 beim Bedienen der Bedienvorrichtung 10 bzw. der berührungssensitiven Bedieneinheit 12 einen Druck pₘ auf die berührungssensitive Bedieneinheit 12 ausübt, welcher den Druckschwellwert pₛ, also eine Auslöseschwelle, überschreitet.

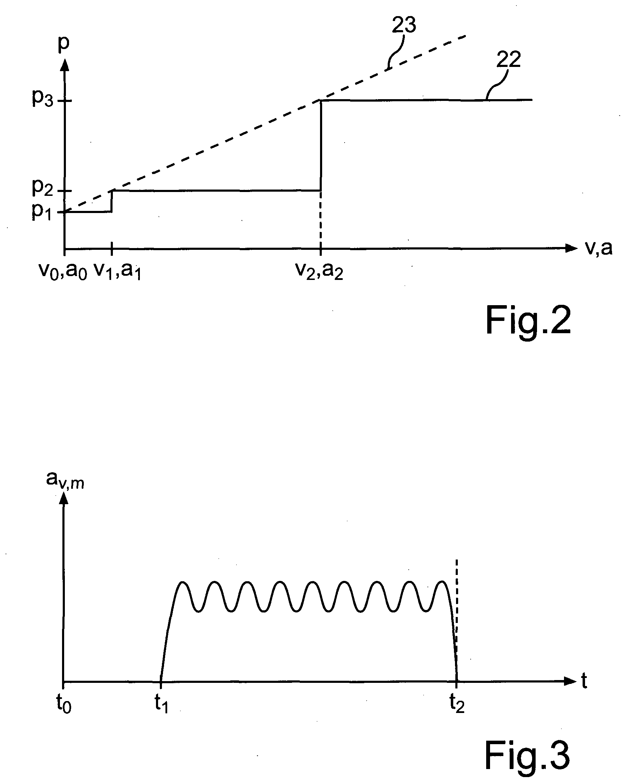

Fig. 2 zeigt beispielhaft zwei Kennlinien 22 und 23, anhand welcher jedem Geschwindigkeitswert v und/oder jedem Beschleunigungswert a ein Druckwert p zugeordnet ist. Anhand der Kennlinien 22 und 23 kann der Druckschwellwert pₛ in Abhängigkeit der erfassten Geschwindigkeit vₘ und/oder der erfassten Beschleunigung aₘ ausgewählt bzw. vorgegeben werden.

Die Kennlinie 22 zeigt einen treppenartigen Verlauf des Druckes p, welcher über die Geschwindigkeit v bzw. die Beschleunigung a aufgetragen ist. Zu einem Geschwindigkeitswert v₀ = 0 bzw. einem Beschleunigungswert a₀ = 0 korrespondiert hier ein erster Druckwert p₁, zu einer ersten Geschwindigkeit v₁ ≠v₀ bzw. einer ersten Beschleunigung a₁ ≠a₀ korrespondiert ein zweiter Druckwert p₂ und zu einer zweiten Geschwindigkeit v₂ > v₁ bzw. einer zweiten Beschleunigung a₂ > a₁ korrespondiert ein dritter Druckwert p₂. Die Kennlinie 22 zeigt dabei, dass in einem Intervall [v₁; v₂[ bzw. [a₁; a₂[ der konstante zweite Druckwert p₂ vorgegeben wird und ab dem zweiten Geschwindigkeitswert v₂ bzw. dem zweiten Beschleunigungswert a₂ der konstante dritte Druckwert p₃ vorgegeben wird. Die Kennlinie 23 zeigt hingegen einen linearen Verlauf, bei welchem der Druckwert p proportional zu dem Geschwindigkeitswert v bzw. dem Beschleunigungswert a erhöht wird.

Möchte der Fahrer des Kraftfahrzeuges beispielsweise eine auf der berührungssensitiven Bedieneinheit 12 dargestellte Menü-Taste bedienen, so wird der Druckschwellwert pₛ, welcher zum erfolgreichen Betätigen der Menü-Taste notwendig ist, an eine Geschwindigkeit vₘ bzw. eine Beschleunigung aₘ des Kraftfahrzeugs angepasst. Möchte der Fahrer des Kraftfahrzeuges beispielsweise im Stand des Kraftfahrzeugs die Menü-Taste bedienen, so kann er sich üblicherweise auf seine Bedieneingabe konzentrieren. Insbesondere kann er seinen Blick auf die berührungssensitive Bedieneinheit 12 wenden.

Die Sensoreinrichtung 20 kann erfassen, dass das Kraftfahrzeug keine Geschwindigkeit vₘ = v₀ = 0 km/h aufweist und sich daher im Stand befindet. Der gemessene Geschwindigkeitswert vₘ = v₀ = 0 km/h kann der Steuereinrichtung 16 bereitgestellt werden. Die Steuereinrichtung 16 kann anhand einer der Kennlinien 22 oder 23, hier anhand der Kennlinie 22, den ersten Druckwert p₁ ermitteln, welcher zu der von der Sensoreinrichtung 20 erfassten Geschwindigkeit vₘ = v₀ = 0 km/h korrespondiert. Der erste Druckwert p₁ kann beispielsweise 3 N betragen. Um die Menü-Taste erfolgreich zu bedienen, muss der Fahrer also einen Druck auf die berührungssensitive Bedieneinheit 12 aufbringen, welcher größer ist als der erste Druckwert p₁ = 3 N.

Sobald das Kraftfahrzeug fährt, also von der Sensoreinrichtung 20 eine Geschwindigkeit vₘ = v₁ ≠v₀ gemessen wird, kann der Fahrer seine Aufmerksamkeit nicht mehr der Bedienung der Bedienvorrichtung 10 widmen, sondern muss sich in der Regel auf das Führen des Kraftfahrzeugs konzentrieren. Aus diesem Grund gibt die Steuereinrichtung 16 anhand einer der Kennlinien 22 oder 23 den zweiten Druckwert p₂ als den Druckschwellwert pₛ vor. Der zweite Druckwert p₂ ist insbesondere größer als der erste Druckwert p₁ und kann beispielsweise 5 N betragen. Der Fahrer muss nun zum erfolgreichen Bedienen der Bedienvorrichtung 10, also zum erfolgreichen Betätigen der Menü-Taste, einen Druck auf die berührungssensitive Bedieneinheit 12 aufbringen, welcher größer ist als p₂ = 5 N. Er muss also fester bzw. stärker auf die berührungssensitive Bedieneinheit 12 drücken, als er es im Stand des Kraftfahrzeugs hätte tun müssen. Dieser erhöhte Druckschwellwert pₛ soll gewährleisten, dass ein Fahrer, welcher die Bedienvorrichtung 10 "blind" bedient, nicht unerwünscht und versehentlich Funktionen des Kraftfahrzeugs auslöst.

Sobald von der Sensoreinrichtung 20 gemessen wird, dass das Kraftfahrzeug eine Geschwindigkeit vₘ = v₂ bzw. überschreitet, so wird von der Steuereinrichtung 16 ein entsprechender dritter Druckwert p₃ als der Druckschwellwert pₛ vorgegeben. Der dritte Druckwert p₃ kann beispielsweise 7 N betragen. Die Geschwindigkeit v₂ kann beispielsweise auftreten, wenn der Fahrer mit dem Kraftfahrzeug auf einer Autobahn fährt und sich somit besonders intensiv auf seine Fahraufgabe konzentrieren muss.

Fig. 3 zeigt eine schematische Darstellung eines Verlaufs einer gemessenen Vertikalbeschleunigung a_{v,m} des Kraftfahrzeugs über die Zeit t. Es ist gezeigt, dass in einem Zeitintervall [t₀, t₁[ keine gemessenen Vertikalbeschleunigung a_{v,m} auftritt, d.h. a_{v,m} =0. In einem Zeitintervall [t₁, t₂[ tritt jedoch eine gemessene Vertikalbeschleunigung a_{v,m} auf, welche einen im Wesentlichen periodischen Verlauf zeigt. Dieser periodische Verlauf deutet darauf hin, dass sich das Kraftfahrzeug auf einem Untergrund bewegt, welcher Unebenheiten, beispielsweise Bodenwellen, aufweist. Durch die Unebenheiten können Vibrationen im Kraftfahrzeug auftreten, welche dem Fahrer Schwierigkeiten bei einer Bedieneingabe, beispielsweise beim Betätigen der Menü-Taste, bereiten können. Insbesondere können durch die Vibrationen Fehlbedienungen entstehen, wenn die Auslöseschwelle zu gering gewählt wurde und der Fahrer beispielsweise mit seinem Finger auf der berührungssensitiven Bedieneinheit 12 verrutscht und versehentlich eine nicht gewünschte Funktion des Kraftfahrzeugs aufruft. Daher kann, falls ermittelt wurde, dass der Untergrund Bodenwellen aufweist, der Druckschwellwert pₛ im Vergleich zu einem Druckschwellwert pₛ erhöht werden, welcher bei einem Untergrund ohne Bodenwellen vorgegeben ist. Wenn das Kraftfahrzeug beispielsweise mit einer Geschwindigkeit vₘ fährt, welche in das Geschwindigkeitsintervall [v₁; v₂[ der Kennlinie 22 fällt und damit der zweite Druckwert p₂ als der Druckschwellwert pₛ vorgegeben ist, kann der Druckschwellwert pₛ auch Unabhängig von der Geschwindigkeit vₘ erhöht werden, wenn beispielsweise anhand der Vertikalbeschleunigung a_{v,m} erfasst wird, dass sich das Kraftfahrzeug auf einem Untergrund mit Bodenwellen bewegt.

## Patentansprüche

1. Verfahren zum Betreiben einer Bedienvorrichtung (10) eines Kraftfahrzeugs, mit den Schritten:
- Erfassen einer Position, an welcher eine berührungssensitive Bedieneinheit (12) mit einem Objekt (18) berührt wird,
- Erfassen eines Druckes (pₘ) mittels einer Erfassungseinrichtung (14), mit welchem die berührungssensitive Bedieneinheit (12) an der Position mit dem Objekt (18) beaufschlagt wird;
- Erfassen einer Geschwindigkeit (vₘ) und/oder einer Beschleunigung (aₘ) des Kraftfahrzeugs;
**gekennzeichnet durch** die Schritte:
- Vorgeben eines Druckschwellwerts (pₛ) in Abhängigkeit von der erfassten Geschwindigkeit (vₘ) und/oder der erfassten Beschleunigung (aₘ) des Kraftfahrzeugs;
- Ermitteln, ob der erfasste Druck (pₘ) größer als der vorgegebene Druckschwellwert (pₛ) ist;
- Auslösen einer der erfassten Position zugeordneten Funktion (F) des Kraftfahrzeugs ausschließlich, falls der erfasste Druck (pₘ) größer als der vorgegebene Druckschwellwert (pₛ) ist.

2. Verfahren nach Anspruch 1,
**dadurch gekennzeichnet, dass**
eine Kennlinie (22, 23) vorgegeben wird, anhand welcher jedem Geschwindigkeitswert (v) und/oder jedem Beschleunigungswert (a) ein Druckwert (p) zuordnet ist, wobei einer der Druckwerte (p) in Abhängigkeit von der erfassten Geschwindigkeit (vₘ) und/oder erfassten Beschleunigung (aₘ) des Kraftfahrzeugs als der Druckschwellwert (pₛ) vorgeben wird.

3. Verfahren nach Anspruch 1 oder 2,
**dadurch gekennzeichnet, dass**
der Druckwert (p) mit steigender Geschwindigkeit (v) und/oder steigender Beschleunigung (a) erhöht wird.

4. Verfahren nach einem der vorhergehenden Ansprüche,
**dadurch gekennzeichnet, dass**
ein erster Druckwert (p₁) als der Druckschwellwert (pₛ) vorgegeben wird, wenn das Kraftfahrzeug steht, und ein zweiter Druckwert (p₂) als der Druckschwellwert (pₛ) vorgegeben wird, wenn das Kraftfahrzeug fährt.

5. Verfahren nach einem Anspruch 4,
**dadurch gekennzeichnet, dass**
zumindest ein dritter Druckwert (p₃) als der Druckschwellwert (pₛ) vorgegeben wird, wenn das Kraftfahrzeug fährt und die erfasste Geschwindigkeit (vₘ) und/oder die erfasste Beschleunigung (aₘ) einen vorgegebenen Geschwindigkeitswert und/oder einen vorgegebenen Beschleunigungswert überschreitet.

6. Verfahren nach einem der vorhergehenden Ansprüche,
**dadurch gekennzeichnet, dass**
beim Erfassen eines Bodenwellen aufweisenden Untergrunds, auf welchem sich das Kraftfahrzeug bewegt, der Druckschwellwert (pₛ) im Vergleich zu einem Druckschwellwert (pₛ), welcher bei einem keine Bodenwellen aufweisenden Untergrund vorgegeben ist, erhöht wird, wobei anhand der erfassten Geschwindigkeit (vₘ) und/oder der erfassten Beschleunigung (aₘ) ermittelt wird, ob sich das Kraftfahrzeug auf dem Bodenwellen aufweisenden Untergrund bewegt.

7. Verfahren nach einem der vorhergehenden Ansprüche,
**dadurch gekennzeichnet, dass**
zur Ermittelung des Bodenwellen aufweisenden Untergrunds eine Vertikalbeschleunigung (a_{v,m}) des Kraftfahrzeugs über ein vorgegebenes Zeitintervall ([t₁,t₂[) erfasst und überprüft wird, ob die Vertikalbeschleunigung (a_{v,m}) innerhalb des Zeitintervalls ([t₁,t₂[) einen durch die Bodenwellen verursachten, im Wesentlichen periodischen Verlauf aufweist.

8. Verfahren nach einem der vorhergehenden Ansprüche,
**dadurch gekennzeichnet, dass**
eine Beschleunigung (aₘ) des Kraftfahrzeugs derart gemessen wird, dass mittels der Erfassungseinrichtung (14) ein Druckwert erfasst wird, welcher durch ein Eigengewicht der berührungssensitiven Bedieneinheit (12) bei der Beschleunigung des Kraftfahrzeugs auf die Erfassungseinrichtung (14) ausgeübt wird.

9. Verfahren nach einem der vorhergehenden Ansprüche,
**dadurch gekennzeichnet, dass**
eine Beschleunigung (aₘ) und/oder eine Geschwindigkeit (vₘ) von einer Sensoreinrichtung (20) des Kraftfahrzeugs gemessen und zum Vorgegeben des zumindest einen Druckschwellwertes (pₛ) bereitgestellt werden.

10. Bedienvorrichtung (10) für ein Kraftfahrzeug, mit
- einer berührungssensitiven Bedieneinheit (12), welche dazu ausgebildet ist, eine Position, an welcher die berührungssensitive Bedieneinheit (12) mit einem Objekt berührt wird, zu erfassen;
- einer Erfassungseinrichtung (14), welche dazu ausgebildet ist, einen Druck (pₘ) zu erfassen, mit welchem die berührungssensitive Bedieneinheit (12) an der Position mit dem Objekt (18) beaufschlagt wird;
**dadurch gekennzeichnet, dass**
die Bedienvorrichtung (10) eine Steuereinrichtung (16) aufweist, welche dazu ausgebildet ist,
- zumindest einen Druckschwellwert (pₛ) in Abhängigkeit von einer erfassten Geschwindigkeit (vₘ) und/oder einer erfassten Beschleunigung (aₘ) des Kraftfahrzeugs vorzugeben,
- zu ermitteln, ob der erfasste Druck (pₘ) größer als der vorgegebene Druckschwellwert (pₛ) ist; und
- ein Auslösen der erfassten Position zugeordneten Funktion (F) des Kraftfahrzeugs zu bewirken, falls der erfasste Druck (pₘ) größer als der vorgegebene Druckschwellwert (pₛ) ist.

## Claims

1. A method for operating an operator control device (10) of a motor vehicle, comprising the steps:
- detecting a position at which a touch-sensitive operator control unit (12) is touched by an object (18),
- detecting a pressure (pₘ) which is applied to the touch-sensitive operator control unit (12) by the object (18) at said position, by means of a detection device (14);
- detecting a velocity (vₘ) and/or an acceleration (aₘ) of the motor vehicle;
**characterised by** the steps:
- predefining a pressure threshold value (pₛ) as a function of the detected velocity (vₘ) and/or the detected acceleration (aₘ) of the motor vehicle;
- determining whether the detected pressure (pₘ) is greater than the predefined pressure threshold value (pₛ);
- triggering a function (F), assigned to the detected position, of the motor vehicle exclusively if the detected pressure (pₘ) is higher than the predefined pressure threshold value (pₛ).

2. The method according to claim 1, **characterised in that** a characteristic curve (22, 23) is predefined, through which each velocity value (v) and/or each acceleration value (a) is assigned a pressure value (p), wherein one of the pressure values (p) is predefined as the pressure threshold value (pₛ) depending on the detected velocity (vₘ) and/or detected acceleration (aₘ) of the motor vehicle.

3. The method according to claim 1 or 2, **characterised in that** the pressure value (p) increases with increasing velocity (v) and/or increasing acceleration (a).

4. The method according to any one of the preceding claims, **characterised in that** a first pressure value (p₁) is predefined as the pressure threshold value (pₛ), if the motor vehicle is stationary, and a second pressure value (p₂) is predefined as the pressure threshold value (pₛ) if the motor vehicle is moving.

5. The method according to claim 4, **characterised in that** at least one third pressure value (p₃) is predefined as the pressure threshold value (pₛ) if the motor vehicle is moving and the detected velocity (vₘ) and/or the detected acceleration (aₘ) exceeds a predefined velocity value and/or a predefined acceleration value.

6. The method according to any one of the preceding claims, **characterised in that** on detecting a bumpy surface, on which the motor vehicle is moving, the pressure threshold value (pₛ) is increased with respect to a pressure threshold value (pₛ) which is predefined for a surface with no bumps, wherein through the detected velocity (vₘ) and/or the detected acceleration (aₘ) it is determined whether the motor vehicle is moving on the bumpy surface.

7. The method according to any one of the preceding claims, **characterised in that** in order to detect the bumpy surface, a vertical acceleration (a_{v,m}) of the motor vehicle is detected over a predefined time interval ([t₁, t₂[) and it is checked whether the vertical acceleration (a_{v,m}) within the time interval ([t₁, t₂[) comprises a substantially periodic pattern caused by the bumps.

8. The method according to any one of the preceding claims, **characterised in that** acceleration (aₘ) of the motor vehicle is measured in such a way that the detection device (14) detects a pressure value that is exerted on the detection device (14) during the acceleration of the motor vehicle by the touch sensitive operator control unit (12) due to the weight thereof.

9. The method according to any one of the preceding claims, **characterised in that** an acceleration (aₘ) and/or a velocity (vₘ) is measured by a sensor device (20) of the motor vehicle and is available for predefining the at least one pressure threshold value (pₛ).

10. An operator control device (10) for a motor vehicle, comprising
- a touch-sensitive operator control unit (12), which is designed such that a position at which the touch-sensitive operator control unit (12) is touched, is detected by an object;
- a detection device (14) which is designed to detect a pressure (pₘ) which is applied to the touch-sensitive operator control unit (12) by the object (18) at said position;
**characterised in that**
the operator control device (10) comprises a control device (16), which is designed in order
- to predefine at least one pressure threshold value (pₛ) according to a detected velocity (vₘ) and/or a detected acceleration (aₘ) of the motor vehicle,
- to determine whether the detected pressure (pₘ) is greater than the predefined pressure threshold value (Pₛ); and
- to cause a triggering of the function (F), assigned to the detected position, of the motor vehicle if the detected pressure (pₘ) is greater than the predefined pressure threshold value (pₛ).

## Revendications

1. Procédé de fonctionnement d'un dispositif de commande (10) d'un véhicule automobile, avec les étapes :
- la détection d'une position sur laquelle une unité de commande (12) tactile vient en contact avec un objet (18),
- la détection d'une pression (pₘ) au moyen d'un dispositif de détection (14) en laquelle l'unité de commande (12) tactile est alimentée dans la position avec l'objet (18) ;
- la détection d'une vitesse (vₘ) et/ou d'une accélération (aₘ) du véhicule automobile ;
**caractérisé par** les étapes :
- la prédéfinition d'une valeur seuil de pression (pₛ) en fonction de la vitesse détectée (vₘ) et/ou de l'accélération détectée (aₘ) du véhicule automobile ;
- la détermination si la pression détectée (pₘ) est supérieure à la valeur seuil de pression (pₛ) prédéfinie ;
- le déclenchement d'une fonction (F) associée à la position détectée du véhicule automobile exclusivement si la pression détectée (pₘ) est supérieure à la valeur seuil de pression (pₛ) prédéfinie.

2. Procédé selon la revendication 1,
**caractérisé en ce que**
une ligne caractéristique (22, 23) est prédéfinie au moyen de laquelle une valeur de pression (p) est associée à chaque valeur de vitesse (v) et/ou chaque valeur d'accélération (a), dans lequel une des valeurs de pression (p) est prédéfinie en fonction de la vitesse détectée (vₘ) et/ou accélération détectée (aₘ) du véhicule automobile en tant que valeur seuil de pression (pₛ).

3. Procédé selon la revendication 1 ou 2,
**caractérisé en ce que**
la valeur de pression (p) est augmentée avec une vitesse croissante (v) et/ou accélération croissante (a).

4. Procédé selon l'une quelconque des revendications précédentes,
**caractérisé en ce que**
une première valeur de pression (p₁) est prédéfinie en tant que valeur seuil de pression (pₛ) lorsque le véhicule automobile est immobile, et une deuxième valeur de pression (p₂) est prédéfinie en tant que valeur seuil de pression (pₛ) lorsque le véhicule automobile se déplace.

5. Procédé selon la revendication 4,
**caractérisé en ce que**
au moins une troisième valeur de pression (p₃) est prédéfinie en tant que valeur seuil de pression (pₛ) lorsque le véhicule automobile se déplace et la vitesse détectée (vₘ) et/ou l'accélération détectée (aₘ) dépasse une valeur de vitesse prédéfinie et/ou une valeur d'accélération prédéfinie.

6. Procédé selon l'une quelconque des revendications précédentes,
**caractérisé en ce que**
lors de la détection d'un sol présentant des ondes de sol, sur lequel le véhicule automobile se déplace, la valeur seuil de pression (pₛ) est augmentée par rapport à une valeur seuil de pression (pₛ) qui est prédéfinie en cas de sol ne présentant aucune onde de sol, dans lequel il est déterminé au moyen de la vitesse détectée (vₘ) et/ou de l'accélération détectée (aₘ) si le véhicule automobile se déplace sur le sol présentant des ondes de sol.

7. Procédé selon l'une quelconque des revendications précédentes,
**caractérisé en ce que**
pour la détermination du sol présentant des ondes de sol une accélération verticale (a_{v,m}) du véhicule automobile est détectée sur un intervalle de temps prédéfini ([t₁, t₂[) et il vérifie si l'accélération verticale (a_{v,m}) présente dans l'intervalle de temps ([t₁, t₂[) une étendue sensiblement périodique, causée par les ondes de sol.

8. Procédé selon l'une quelconque des revendications précédentes,
**caractérisé en ce que**
une accélération (aₘ) du véhicule automobile est mesurée de telle manière qu'au moyen du dispositif de détection (14) une valeur de pression soit détectée, laquelle est exercée par un propre poids de l'unité de commande tactile (12) lors de l'accélération du véhicule automobile sur le dispositif de détection (14).

9. Procédé selon l'une quelconque des revendications précédentes,
**caractérisé en ce que**
une accélération (aₘ) et/ou une vitesse (vₘ) est mesurée par un dispositif de capteur (20) du véhicule automobile et est mise à disposition pour la prédéfinition d'au moins une valeur seuil de pression (pₛ).

10. Dispositif de commande (10) pour un véhicule automobile avec
- une unité de commande tactile (12) qui est réalisée afin de détecter une position sur laquelle l'unité de commande (12) tactile vient en contact avec un objet ;
- un dispositif de détection (14) qui est réalisé afin de détecter une pression (pₘ) en laquelle l'unité de commande tactile (12) est alimentée dans la position avec l'objet (18) ;
**caractérisé en ce que**
le dispositif de commande (10) présente un dispositif de commande (16) qui est réalisé afin de
- prédéfinir au moins une valeur seuil de pression (pₛ) en fonction d'une vitesse détectée (vₘ) et/ou d'une accélération détectée (aₘ) du véhicule automobile,
- déterminer si la pression détectée (pₘ) est supérieure à la valeur seuil de pression (pₛ) prédéfinie ; et
- provoquer un déclenchement de la fonction associée à la position détectée (F) du véhicule automobile si la pression détectée (pₘ) est supérieure à la valeur seuil de pression (pₛ) prédéfinie.
